# EUROPÄISCHE PATENTSCHRIFT

(11) **EP 2 119 918 B1**
(45) Veröffentlichungstag und Bekanntmachung des Hinweises auf die Patenterteilung: **16.01.2019**
(21) Anmeldenummer: 09005617.7
(22) Anmeldetag: 22.04.2009
(51) Int. Cl.: F04D 29/20, F16D 1/092

(54) **Befestigung eines Pumpenlaufrades**
Mounting of a pump wheel
Fixation d'une roue directrice de pompe

(30) Priorität: 17.05.2008 DE 102008024064
(43) Veröffentlichungstag der Anmeldung: 18.11.2009
(73) Patentinhaber: WILO SE, 44263 Dortmund (DE)
(72) Erfinder: Tolstoj, Aleksej, 44287 Dortmund (DE)
(74) Vertreter: Cohausz Hannig Borkowski Wißgott

(56) Entgegenhaltungen:
- FR-A- 1 015 756
- FR-A5- 2 191 654
- GB-A- 603 071
- US-A- 454 019
- US-A- 1 959 710
- US-A- 2 600 946
- US-A1- 2005 141 954
- US-A1- 2007 036 660

## Beschreibung

Die Erfindung betrifft eine Anordnung umfassend eine Antriebswelle und ein darauf befestigtes Pumpenlaufrad, in dem koaxial eine Laufradöffnung angeordnet ist, die mit einer konusförmigen Innenwand auf einem entsprechend geformten konusförmigen Sitz der Antriebswelle befestigt ist, wobei der Durchmesser des Konus von Laufradöffnung und Sitz sich mit der Entfernung vom Laufrad -Saugmund vergrößert.

Eine solche Befestigungsart ist beispielsweise aus dem britischen Patent GB 603071 A bekannt. Soll das Laufrad von der Antriebswelle gelöst werden, so ist ein Abziehwerkzeug erforderlich, um den klemmenden Halt auf dem konusförmigen Sitz zu überwinden. Dies ist zum einen arbeitsaufwendig und zum anderen kann es zu einer Beschädigung des Laufrades führen, insbesondere wenn dieses aus Kunststoff besteht.

Die gleichen Probleme entstehen auch dann, wenn der Innenkonus des Laufrades durch eine Spannhülse gebildet wird, die mittels einer Schraube in den konischen Spalt zwischen Laufrad und Antriebswelle getrieben wird, wie dies die FR 1015756 A zeigt.

Die US 454019 A beschreibt die Befestigung eines Zahnrads auf einer Welle, wobei dies unter Ausübung hoher Kräfte erfolgen soll, in dem eine Differentialmutter mit einem Außengewinde zum Zahnrad und einem Innengewinde zur Welle hin verwendet wird. Das Problem eines zu festen Presssitzes zwischen Welle und Zahnrad im Falle einer Demontage der Verbindung ist in der Schrift nicht erwähnt.

Eine Differentialmutter mit einem Innengewinde zum Aufschrauben auf ein Außengewinde der Welle, und mit einem Außengewinde zum Einschrauben in ein Innengewinde eines zu befestigenden Elements offenbaren auch die US 2600946 A und die FR 2191654 A5, wobei die letztgenannte französische Schrift ebenfalls ein Zahnrad betrifft.

Die US 1959710 A lehrt die Verwendung einer Schraube, die in ein Innengewinde am Wellenende eingeschraubt wird und so das Laufrad mit seiner konischen Öffnung auf das konische Wellenende drückt.

Die US 2007/036660 A1 sieht vor, dass das Ende einer Welle zylinderförmig und mit einem Außengewinde ausgeführt ist, mittels welchem das Laufrad auf die Welle geschraubt wird.

Aufgabe der Erfindung ist es, eine Befestigung der Eingangs genannten Art so zu verbessern, dass ein Laufrad aus Kunststoff von der Antriebswelle leicht, zerstörungsfrei und ohne ein Abziehwerkzeug lösbar ist.

Diese Aufgabe wird erfindungsgemäß dadurch gelöst,
- dass das Wellenende ein Außengewinde aufweist, auf dem eine Mutter mit ihrem Innengewinde sitzt,
- dass die Mutter ein Außengewinde aufweist, mit dem sie in einem Innengewinde der Laufradöffnung sitzt,
- dass das Gewindepaar zwischen Wellenende und Mutter eine größere oder kleinere Steigung aufweist als die Steigung des Gewindepaars zwischen Mutter und Laufradöffnung und
- dass die Laufradöffnung von einer Laufradbuchse aus Metall gebildet ist, die koaxial im Pumpenlaufrad befestigt und vom Kunststoff des Pumpenlaufrades umgeben ist.

Aufgrund der unterschiedlichen Steigungen der beiden Gewindebefestigungen führt ein Aufdrehen der Mutter zu einem Zug am Laufrad gegenüber der Welle in Achsrichtung, wodurch das Laufrad von der Welle aus dem Klemmsitz gelöst wird. Es bedarf somit keines Abziehwerkzeuges, sondern es muss nur die Mutter in Löserichtung gedreht zu werden. Die Verbindung wird in solch einer Position montiert, dass mittels der Mutter sowohl die Montage als auch die Demontage des Laufrades erfolgen kann.

Dadurch, dass die Laufradöffnung von einer Laufradbuchse gebildet ist, die koaxial im Laufrad befestigt ist, bilden das Laufrad und die Laufradbuchse eine Einheit und werden durch das Aufdrehen der Mutter gemeinsam von der Welle abgezogen. Da die Laufradbuchse aus Metall gefertigt ist, kann sie die radialen Klemmkräfte aufnehmen. Vorzugsweise ist die Laufradbuchse vom Kunststoff des Pumpenlaufrades umspritzt.

Vorzugsweise wird vorgeschlagen, dass die Laufradöffnung neben der konusförmigen Innenwand einen koaxialen zylinderförmigen Innenwandbereich mit dem Innengewinde aufweist.

Ferner wird vorgeschlagen, dass beide Gewindepaare dieselbe Drehrichtung aufweisen. Auch ist von Vorteil, wenn die Mutter aus Metall besteht.

Von Vorteil ist, wenn beide Gewindepaare je nach Motordrehrichtung als Rechts- bzw. als Linksgewinde ausgeführt sind, so dass die Verbindung selbstanziehend ist. Auch können die Gewindepaare so kombiniert sein, dass zwei verschiedene genormte Steigungen eine minimale Differenz ergeben.

Ein Ausführungsbeispiel der Erfindung ist in der Zeichnung dargestellt und wird im Folgenden näher beschrieben. Es zeigen:
- Figur 1: einen axialen Schnitt durch ein auf einer Welle befestigtes Pumpenlaufrad und
- Figur 2: eine perspektivische Ansicht des befestigten Laufrades.

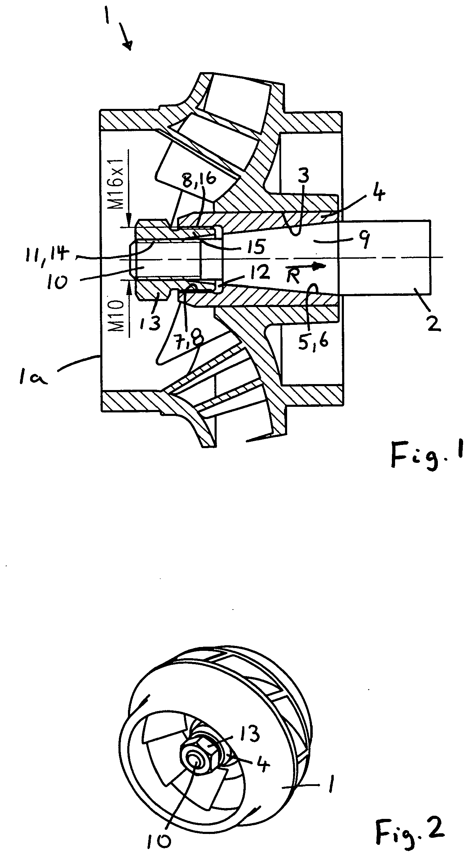

Bei einer Motorkreiselpumpe ist das Pumpenlaufrad 1 auf der Abtriebswelle 2 eines Elektromotors lösbar befestigt. Hierbei sind das Pumpengehäuse und der Elektromotor in den Figuren 1 und 2 nicht dargestellt.

Das Laufrad 1 mit dem Saugmund 1a besteht aus Kunststoff oder Metall und weist eine koaxiale Bohrung 3 auf, in der eine Laufradbuchse 4 unlösbar befestigt ist. Bei einem Laufrad aus Kunststoff ist die Buchse 4 vom Kunststoff umspritzt.

Die Laufradbuchse 4 weist eine innere koaxiale Öffnung 5 auf, mit einer konusförmigen Innenwand 6, deren Konusform sich in Richtung des Pfeiles R zum Antriebsmotor hin erweitert. Neben dem Bereich der konusförmigen Innenwand 6 schließt sich in der Buchse 4, auf der dem Motor abgewandten Seite, ein koaxialer zylindrischer Innenwand-Bereich 7 an, der ein Innengewinde 8 bildet.

Die Welle 2 besitzt einen entsprechend der konusförmigen Innenwand 6 geformten konusförmigen Bereich 9, wodurch die Buchse 4 auf der Welle 2 im Klemmsitz befestigt ist.

Das äußere dem Motor abgewandte Ende der Welle 2 ist von einem koaxialen bolzenförmigen Bereich 10 gebildet, der ein Außengewinde 11 aufweist. Hierbei ist der Durchmesser des Bereichs 10 kleiner als der Durchmesser des zylindrischen Innenwand-Bereichs 7, so dass an dieser Stelle ein ringförmiger Freiraum 12 zwischen Welle 2 und Buchse 4 besteht. In diesen Freiraum 12 ist eine Mutter 13 eingeschraubt, die mit ihrem Innengewinde 14 auf dem Außengewinde 11 aufgeschraubt ist und mit einer koaxialen buchsenförmigen Verlängerung 15 im Freiraum 12 einliegt, wobei die Verlängerung 15 ein Außengewinde 16 besitzt, mit dem sie im Innengewinde 8 der Buchse 4 einliegt.

Es ist von Bedeutung, dass das Gewindepaar 11, 14 zwischen Mutter 13 und dem Bereich 10 der Welle 2 eine größere Steigung (insbesondere ein Gewinde M10) besitzt als das Gewindepaar aus Innengewinde 8 und Außengewinde 16, zwischen Mutter 13 und Laufradbuchse 4, das vorzugsweise ein M16 Gewinde ist. Hierbei besitzen alle Gewindepaare dieselbe Drehrichtung. Sie sind also entweder Links- oder Rechtsgewinde.

Wird die Mutter 13 im Falle eines Rechtsgewindes im Gegenuhrzeigersinn gedreht, so erzeugt das Differentialgewinde eine summare Axialbewegung der Buchse 4, so dass die Buchse zusammen mit dem Laufrad von der Welle 2 abgezogen wird und damit der klemmende Halt zwischen Buchse und Welle gelöst wird. Zur Befestigung des Laufrades wird die Mutter im Uhrzeigersinn gedreht.

Beide Gewindepaare zusammen bilden somit Differentialgewinde. Die Eigenschaft eines Differentialgewindes, kleine Axialbewegungen mit herkömmlichen Gewindesteigungen zu ermöglichen, bewirkt, dass eine größere Vorspannkraft in Kegelverbindung mit geringeren Mutteranziehmomenten erreicht wird, und dass das Anziehmoment feiner dosiert werden kann.

Die Tatsche, dass die Gewindegänge von allen drei Teilen - Welle 2, Mutter 13 und Buchse 4 - stets verzahnt sind, ermöglicht den Wechsel zwischen Montage- und Demontagevorgang lediglich durch den Drehrichtungswechsel der Mutter 13.

In einer alternativen Ausführung weist das Gewindepaar 11, 14 zwischen Mutter 13 und dem Bereich 10 der Welle 2 eine kleinere Steigung auf als das Gewindepaar aus Innengewinde 8 und Außengewinde 16 zwischen Mutter 13 und Laufradbuchse 4. Auch in dieser Ausführung werden dieselben obengenannten Wirkungen und Vorteile erzielt.

In einem nicht dargestellten Ausführungsbeispiel befindet sich im Laufrad 1 keine Laufradbuchse 4, sondern die Öffnung 5 des Laufrades und damit auch die konusförmige Innenwand 6 wird direkt vom Material des Laufrades 1 gebildet. Hierbei bildet das Laufrad 1 mit seinem Material auch den Freiraum 12 mit dem Innengewinde 8, in dem die Mutter 13 mit ihrem Außengewinde 16 einliegt. Eine solche Ausführung ohne innere Laufradbuchse 4 ist insbesondere dann von Vorteil, wenn das gesamte Laufrad 1 aus Metall besteht.

Um eine selbstanziehende Befestigung zu schaffen, sind beide Gewindepaare 8, 16 und 11, 14 je nach Motordrehrichtung als Rechts- bzw. als Linksgewinde ausgeführt, so dass die Verbindung selbstanziehend ist. Auch sind die Gewindepaare 8, 16 und 11, 14 so kombiniert, dass zwei verschiedene genormte Steigungen eine minimale Differenz ergeben.

## Patentansprüche

1. Anordnung umfassend eine Antriebswelle (2) und ein darauf befestigtes Pumpenlaufrad (1), in dem koaxial eine Laufradöffnung (5) angeordnet ist, die mit einer konusförmigen Innenwand (6) auf einem entsprechend geformten konusförmigen Sitz (9) der Antriebswelle (2) befestigt ist, wobei der Durchmesser des Konus von Laufradöffnung (5) und Sitz (9) sich mit der Entfernung vom Laufrad-Saugmund (1a) vergrößert, wobei
das Wellenende (10) ein Außengewinde (11) aufweist, auf dem eine Mutter (13) mit ihrem Innengewinde (14) sitzt **dadurch gekennzeichnet,**
- **dass** die Mutter (13) ein Außengewinde (16) aufweist, mit dem sie in einem Innengewinde (8) der Laufradöffnung (5) sitzt, dass das Gewindepaar (11, 14) zwischen Wellenende (10) und Mutter (13) eine größere oder kleinere Steigung aufweist als die Steigung des Gewindepaars (8, 16) zwischen Mutter (13) und Laufradöffnung (5), und
- **dass** die Laufradöffnung (5) von einer Laufradbuchse (4) aus Metall gebildet ist, die koaxial im Pumpenlaufrad (1) befestigt und vom Kunststoff des Pumpenlaufrades (1) umgeben ist.

2. Anordnung nach Anspruch 1, **dadurch gekennzeichnet, dass** die Laufradbuchse (4) vom Kunststoff des Pumpenlaufrades (1) umspritzt ist.

3. Anordnung nach Anspruch 1 oder 2, **dadurch gekennzeichnet, dass** die Laufradöffnung (5) neben der konusförmigen Innenwand (6) einen koaxialen zylinderförmigen Innenwandbereich (7) mit dem Innengewinde (8) aufweist.

4. Anordnung nach einem der vorherigen Ansprüche, **dadurch gekennzeichnet, dass** beide Gewindepaare (8, 11, 14, 16) dieselbe Drehrichtung aufweisen.

5. Anordnung nach einem der vorherigen Ansprüche, **dadurch gekennzeichnet, dass** die Mutter (13) aus Metall besteht.

6. Anordnung nach einem der vorherigen Ansprüche, **dadurch gekennzeichnet, dass** beide Gewindepaare (8, 16 und 11, 14) je nach Motordrehrichtung als Rechts- bzw. als Linksgewinde ausgeführt sind, so dass die Verbindung selbstanziehend ist.

7. Anordnung nach einem der vorherigen Ansprüche, **dadurch gekennzeichnet, dass** die Gewindepaare (8, 16 und 11, 14) so kombiniert sind, dass zwei verschiedene genormte Steigungen eine minimale Differenz ergeben.

## Claims

1. Arrangement comprising a drive shaft (2) and a pump impeller (1) mounted thereon, in which an impeller opening (5) is arranged coaxially, which is mounted with a conical inner wall (6) on a correspondingly shaped conical seat (9) of the drive shaft (2), wherein the diameter of the cone of the impeller opening (5) and seat (9) increases with the distance from the impeller suction mouth (1a), wherein the shaft end (10) has an external thread (11) on which a nut (13) is seated with its internal thread (14), **characterized**
- **in that** the nut (13) has an external thread (16) with which it sits in an internal thread (8) of the impeller opening (5), in that the pair of threads (11, 14) between shaft end (10) and nut (13) has a larger or smaller pitch than the pitch of the pair of threads (8, 16) between nut (13) and impeller opening (5), and
- **in that** the impeller opening (5) is formed by an impeller bush (4) made of metal which is coaxially fastened in the pump impeller (1) and is surrounded by the plastic of the pump impeller (1).

2. Arrangement according to claim 1, **characterized in that** the impeller bush (4) is encapsulated by the plastic of the pump impeller (1).

3. Arrangement according to claim 1 or 2, **characterized in that** the impeller opening (5) has, in addition to the conical inner wall (6), a coaxial cylindrical inner wall region (7) having the internal thread (8).

4. Arrangement according to one of the previous claims, **characterized in that** both pairs of threads (8, 11, 14, 16) have the same direction of rotation.

5. Arrangement according to one of the previous claims, **characterized in that** the nut (13) is made of metal.

6. Arrangement according to one of the previous claims, **characterized in that** both pairs of threads (8, 16 and 11, 14) are designed, depending on the direction of rotation of the motor, as right-hand or left-hand threads, so that the connection is self-tightening.

7. Arrangement according to one of the previous claims, **characterized in that** the pairs of threads (8, 16 and 11, 14) are combined such that two different standardized pitches give a minimum difference.

## Revendications

1. Agencement comprenant un arbre d'entraînement (2) et une roue de pompe (1) montée sur celui-ci, dans lequel est disposée coaxialement une ouverture de roue (5) qui est montée avec une paroi intérieure conique (6) sur un siège conique de forme correspondante (9) de l'arbre d'entraînement (2), le diamètre du cône de l'ouverture de roue (5) et du siège (9) augmentant avec la distance par rapport à l'orifice d'aspiration de roue (1a), l'extrémité d'arbre (10) présentant un filetage extérieur (11) sur lequel un écrou (13) est monté avec son filetage intérieur (14), **caractérisé**
- **en ce que** l'écrou (13) présente un filetage extérieur (16) avec lequel il est logé dans un filetage intérieur (8) de l'ouverture de roue (5), en ce que la paire de filetages (11, 14) entre l'extrémité d'arbre (10) et l'écrou (13) présente un pas supérieur ou inférieur au pas de la paire de filetages (8), 16) entre l'écrou (13) et l'ouverture de roue (5), et
- **en ce que** l'ouverture de roue (5) est formée par une douille de roue métallique (4) qui est fixée coaxialement dans la roue de pompe (1) et est entourée par le plastique de la roue de pompe (1).

2. Agencement selon la revendication 1, **caractérisé en ce que** la douille de roue (4) est encapsulée par le plastique de la roue de pompe (1).

3. Agencement selon la revendication 1 ou 2, **caractérisé en ce que** l'ouverture de roue (5) présente, outre la paroi intérieure conique (6), une région de paroi intérieure cylindrique coaxiale (7) avec le filetage intérieur (8).

4. Agencement selon l'une des revendications précédentes, **caractérisé en ce que** les deux paires de filetages (8, 11, 14, 16) ont le même sens de rotation.

5. Agencement selon l'une des revendications précédentes, **caractérisé en ce que** l'écrou (13) est en métal.

6. Agencement selon l'une des revendications précédentes, **caractérisé en ce que** les deux paires de filetages (8, 16 et 11, 14) sont réalisées, en fonction du sens de rotation du moteur, sous forme de filetages à droite ou à gauche, de sorte que l'assemblage est autoserrant.

7. Agencement selon l'une des revendications précédentes, **caractérisé en ce que** les paires de fils (8, 16 et 11, 14) sont combinées de sorte que deux pas standardisé différents donnent une différence minimale.
